Europäisches Patentamt

European Patent Office

Office européen des brevets

(11) Veröffentlichungsnummer: **0 246 479**

**A1**

(12) **EUROPÄISCHE PATENTANMELDUNG**

(21) Anmeldenummer: 87106384.8

(22) Anmeldetag: 02.05.87

(51) Int. Cl.4: **F16L 59/14** , D21F 3/08 , E04H 12/28 , B28B 21/72 , F16L 9/14

(30) Priorität: 06.05.86 DE 8612410 U

(43) Veröffentlichungstag der Anmeldung: 25.11.87 Patentblatt 87/48

(84) Benannte Vertragsstaaten: AT DE FR GB NL SE

(71) Anmelder: **Pott, Richard**
**Tannenbergstrasse 33**
**D-4937 Lage(DE)**

(72) Erfinder: **Pott, Richard**
**Tannenbergstrasse 33**
**D-4937 Lage(DE)**

(74) Vertreter: **Stracke, Alexander, Dipl.-Ing. et al**
**Jöllenbecker Strasse 164**
**D-4800 Bielefeld 1(DE)**

(54) **Formkörper in Stützkernbauweise.**

(57) Ein Formkörper in Stützkernbauweise ist erfindungsgemäß so gestaltet, daß zwischen einem Vollwand-Außenrohr (2) und einem Innenkörper, der aus einem im Querschnitt vollflächigen Stab oder aus einem Innenrohr (1) bestehen kann, eine Stützkernschicht (3) aus keramischem Material, vorzugsweise Blähton oder Blähschiefer angeordnet ist. Durch diese konstruktiven Maßnahmen wird ermöglicht, daß ein hochbelastbarer Formkörper bei geringsmöglichem Gewicht für eine industrielle Fertigung oder eine Fertigung in Kleinserien zu niedrigen Kosten herstellbar ist. Dabei können vorgefertigte als Halbzeug vorhandene Außenrohre (2) und Innenkörper einfach ineinander gesteckt und der entstehende Zwischenraum mit dem Stützkernmaterial ausgefüllt werden.

Fig.1

## Formkörper in Stützkernbauweise

Die vorliegende Erfindung betrifft einen Formkörper in Stützkernbauweise.

Die Stützkern-oder Sandwichbauweise wurde für die Herstellung von Formkörpern, insbesondere auch von Rohren schon mehrfach, jedoch bisher ohne nennenswerten Erfolg versucht, sie ist deshalb bekannt.

Ein Formkörper in Stützkernbauweise hat als Konstruktionselement gegenüber im Querschnitt vollflächigen Stäben oder dickwandigen Vollwandrohren erhebliche technische und wirtschaftliche Vorteile, da er auf dem Prinzip des Doppel-T-Trägers beruht und sich dessen statische Überlegenheit zunutze machen kann.

Ein Stützkern, meistens aus synthetischem Werkstoff wie Hartschaum oder regelmäßigen Strukturen geformte Waben aus Aluminium, Polycarbonat, Zellulose-oder Aramidfaserpapier ist beispielsweise von relativ dünnwandigen Innen-und Außenrohren deckschichtbildend eingeschlossen. Erreicht wird durch diese Bauweise insbesondere ein wesentlich günstigeres Gewichts-Festigkeitsverhältnis gegenüber Rohren in Vollwand-Bauweise, die zur Erreichung gleicher Trägheitsmomente größere Einsatzgewichte erforderlich machen würden. Vollwandrohre gleicher Lastaufnahmefähigkeit wären hinsichtlich Schub, Biege-, Scheiteldruck-und Torsionsbeanspruchung bis zu einem Vielfachen schwerer.

Jedoch waren bisherige und in der Literatur beschriebene Versuche deshalb wenig erfolgreich, weil die Lochleibungsfestigkeit und die Scheiteldruckstabilität bei Verwendung von labilem Stützkernmaterial bei stärkerer Einsatzbeanspruchung nicht ausreichte.

Als Rohre wurden dabei gewickelte Glasfaserstränge oder -bänder eingesetzt, welche durch Parallelwicklung über einen Aufnahmedorn die Außenrohre für den Formkörper zu erstellen hatten und das Produkt sehr schwer und teuer werden ließen.

Es ist auch schon versucht worden, Schaumglas-Kugelgranulat in Polyesterharz gebunden zu einer den Stützkern bildenden Paste zu verarbeiten. Diese Rohrkörper hatten den erheblichen Nachteil zu geringer Festigkeit durch die nur sehr geringe mechanische Belastbarkeit der Schaumglaskugeln und des zu hohen Preises und Gewichtes durch den erforderlichen hohen Bindemittelanteil.

Die Erfindung hat es sich deshalb zur Aufgabe gemacht, einen hochbelastbaren Formkörper bei geringstmöglichem Gewicht für eine industrielle Fertigung oder eine Fertigung in Kleinserien zu niedrigen Kosten herzustellen.

Erreicht wird dieses Ziel dadurch, daß zwischen einem Vollwand-Außenrohr und einem Innenkörper eine Stützkernschicht aus keramischen Material, vorzugsweise Blähton oder Blähschiefer angeordnet ist.

Dabei werden die als Halbzeuge vorhandenen Außenrohr und der Innenkörper einfach ineinander gesteckt und mit dem Stützkernmaterial ausgefüllt.

Der Innenkörper kann erfindungsgemäß sowohl aus einem im Querschnitt vollflächigen Stab bestehen oder aus einem Vollwand-Innenrohr gebildet sein.

Ein wesentlicher Erfindungsgedanke besteht in der Verwendung von Blähton oder Blähschiefer, welcher aus bei ca. 1300 ° C ofengebranntem harten Leichtton in Form von Pellets, Kügelchen, Granulat oder Gries besteht. Dieser Blähton oder Blähschiefer ergibt als Gemisch mit einem Bindemittel auf der Basis von Phenolharz in flüssiger oder Pulverform, Epoxid-, Polyester-, Vinylester-, oder Silikonharz ein äußerst höchbelastbares und relativ leichtes Gefüge, dessen spezifisches Gewicht bei ca. 600 bis 800 g /dm$^3$ liegt und mithin eine Schwimmfähigkeit ermöglicht.

Ein weiterer wichtiger Erfindungsgedanke ist darin zu sehen, den vorbeschriebenen Stützkern an den Verbindungsstellen zu dem Innenkörper und dem Vollwandaußenrohr mittels harzgetränktem Fasermaterial zu verstärken, um gleichzeitig eine gute Haftvermittlung zwischen dem Stützkern und dem Innenkörper und Außenrohr zu einem homogenen Verbund zu erreichen.

Die kunstharzimprägnierten Faserschichten bestehen vorzugsweise aus in Formkörperlängsachse orientierten Fasern auf der Basis von Glas, Carbon, Aramid, Polyethylen oder Metallen in Form von Gelegen, Geweben oder Gittergeweben. Bei Verwendung von metallischen Innenkörpern und Außenrohren kann das Bindemittel für den Stützkern in Pulverform mit dem Blähton bzw. Blähschiefer vermischt und eingebracht werden und so das Gemisch durch Hitzezuführung im Bereich von ca. 120 bis 220 ° C auf umweltschonende Art aushärten.

Die aus verstärktem Kunststoff oder thermoplastischem Kunststoff auf der Basis von z. B. Polyvinylchlorid, Polystyrol, Polycarbonat, Polyamid oder Acetat-Butadien-Styrol bestehenden Innenkörper und Außenrohre verfügen auch bereits ohne zusätzliche Faserverstärkung über eine hohe Belastbarkeit bei äußerst günstigen Material-und Herstellungskosten.

Ein Vorteil des erfindungsgemäßen Formkörpers ist seine hohe mechanische Belastbarkeit und die Möglichkeit von Flansch-und Schraubverbindungen sowie die Zerlegungs-und Wiedermontierbarkeit bei Großrohren durch Verklebung, Verlaschung oder Verschraubung.

Die erfindungsgemäßen Formkörper können für die unterschiedlichen Zwecke Verwendung finden,

1. beispielsweise als Ersatz für die bisherigen umwelt-und gesundheitsgefährdenden Asbestzementrohre,

2. im Tank-und Behälterbau als Außenmäntel in verschraubbaren Segmenten,

3. als Trag-und Stützkonstruktion im Hoch-, Brücken-und Tiefbau,

4. als Industrieschornsteine im Bau von Industrieanlagen,

5. als kastenförmige Rohrkörper für Tragbalken im Innenausbau mit Holzverkleidung,

6. als schwimmende Rohrkonstruktionen für Pipelines etc.,

7. als Rohrleitung mit korrosionsbeständiger, billiger und hochwirksamer Wärmeisolierung aus einem witterungs-und alterungsbeständigem Werkstoff mit selbstverlöschenden Eigenschaften im Brandfalle bei höchstmöglicher Scheiteldruck-, Torsions-, Schub-und Biegefestigkeit sowie Beulsteifigkeit,

8. als Walzen mit harter, verschleißfester oder weicher, gummierter Oberfläche,

Die Aufzählung der Einsatzmöglichkeiten der Formkörper erhebt keinen Anspruch auf Vollständigkeit.

Weitere Ausgestaltungen der Erfindung sind in den Unteransprüchen gekennzeichnet.

Ausführungsbeispiele der Erfindung werden nachfolgend anhand beigefügter Zeichnungen beschrieben.

Es zeigen:

Fig. 1 einen Formkörper aus Rundrohren im Querschnitt,

Fig. 2 einen Formkörper schichtweise in einer Seitenansicht,

Fig. 3 einen vergrößerten Ausschnitt einer Formkörperwandung,

Fig. 4 einen Formkörper aus Vierkantrohren,

Fig. 5 ein Segment eines teilbaren Formkörpers,

Fig. 6 ein weiteres Ausführungsbeispiel eines erfindungsgemäßen Formkörpers in einer perspektivischen Darstellung.

Neben den in den Figuren dargestellten Querschnittformen sind auch andere Querschnittsformen wie Ovale, Dreiecke oder Mehrecke möglich. Ebenso ist innerhalb des Stützkernes 3 die Verwendung von einem oder mehreren Einlegerohren zur zusätzlichen Armierung möglich.

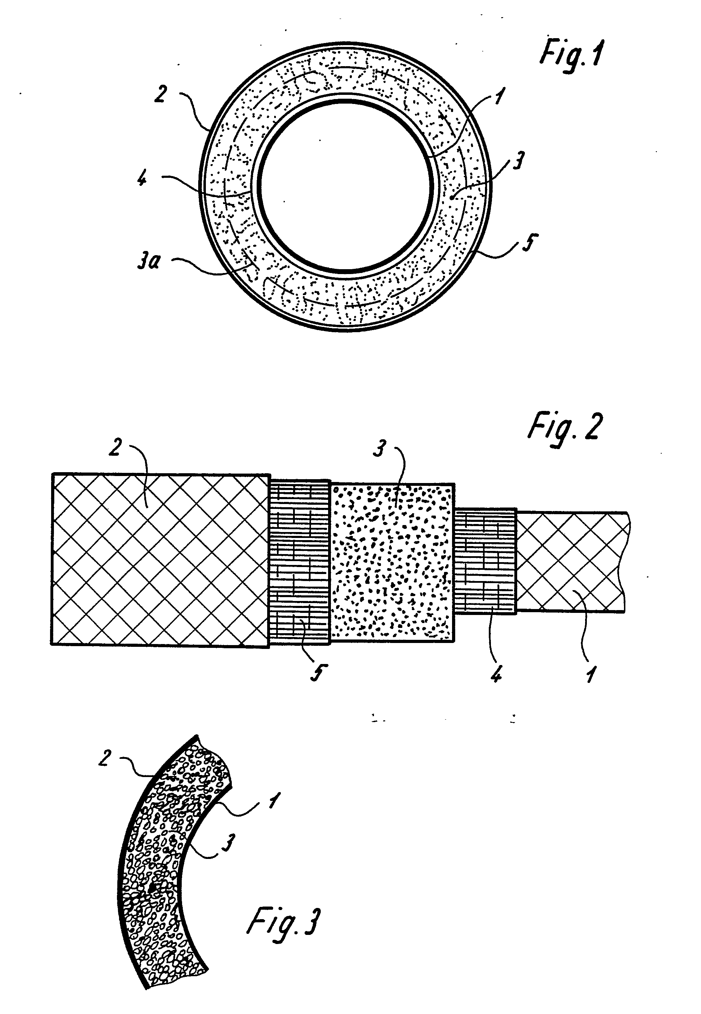

In der Figur 1 wird der Stützkern 3 aus dem keramischen Leichtstoff Blähton oder Blähschiefer kunstharz-oder mineralisch gebunden von dem Vollwand-Außenrohr 2 und dem Vollwand-Innenrohr 1 als Decklagen umschlossen. An den Verbindungsflächen zwischen dem Stützkern 3 und dem Außenrohr 2 befindet sich die Verstärkungsschicht aus Fasermaterial 5 ebenso wie zwischen dem Stützkern 3 und dem Innenrohr 1. Gegebenenfalls kann auf die Verstärkungsschichten 4, 5 verzichtet werden. Auch ist die Anordnung von einem oder mehreren Einlagerohren 3a zur zusätzlichen Armierung möglich.

In Figur 2 ist der Aufbau der Einzellagen des erfindungsgemäßen Formkörpers ersichtlich, wobei im gezeigten Beispiel die Verstärkungsschichten 5, 4 aus in Formkörperlängsachse orientierten und gleichgerichteten Fasern aus z. B. E-Glas-, R-Glas-, Carbon-, Siliziumcarbid-, Aramid-oder Metallfasern bestehen. Die längsorientierten Fasern sind in diesem Falle durch dünne und schmale Polyestervlies-Klebestreifen in Querrichtung zusammengehalten.

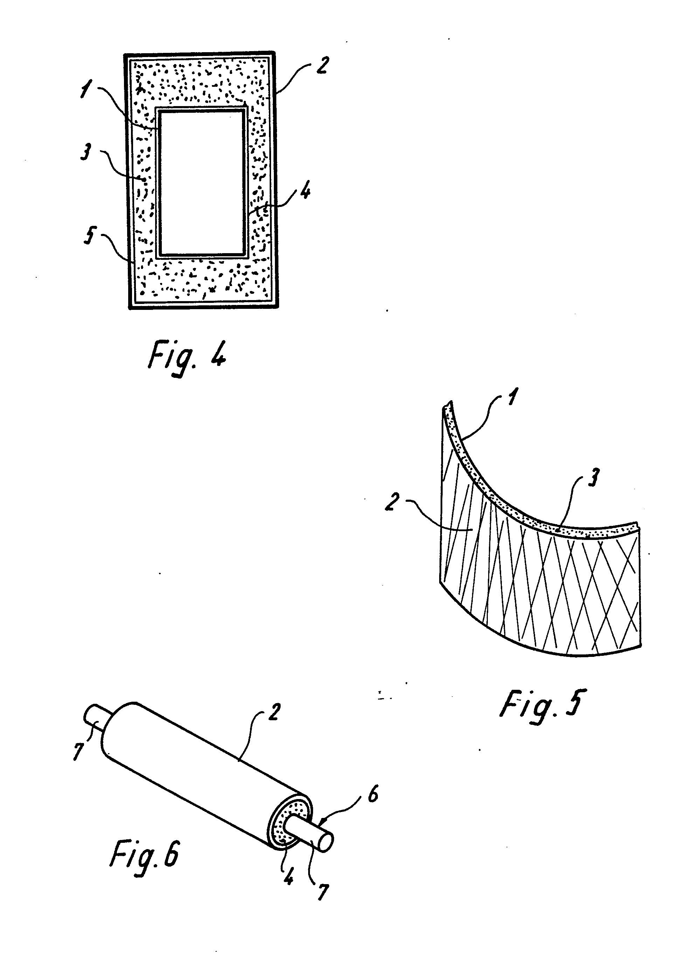

Figur 3 zeigt einen vergrößerten Ausschnitt des Stützkernes 3 mit den Wandungen des Außenrohres 2 und des Innenrohres 1. Ersichtlich ist hier, daß sich die Einzelkörner des Blähtons oder Blähschiefers kunstharzummantelt und luft-und/oder reaktionsschaumeinschließend gegeneinander abstützen.

In Figur 4 wird ein Rohrkörper in Rechteckform im Schnitt bild gezeigt. Der schichtweise Aufbau ist dabei mit dem in Figur 1 und 2 dargestellten gleich. Die Rechteckform bietet die zusätzliche Möglichkeit, die Seitenflänken mit Holzfurnier, Aluminium-oder Edelstahlblechen od. dgl. als Dekoroberfläche zu versehen. Ebenso bietet ein Rechteckrohrkörper den statischen Vorteil, ihn z. B. als Biegeträger mit Ober-und Untergurt sowie den Seitenstegen zur Aufnahme hoher statischer Auflagekräfte einzusetzen.

Figur 5 zeigt die Sektion eines Großrohres, welches am Montageört verschraubt, verklebt oder verlascht zu ganzen Baugruppen oder im Verbund mit anderen Werkstoffen eingesetzt werden kann.

In der Figur 6 ist als weiteres Ausführungsbeispiel eine Walze dargestellt, wobei der Innenkörper aus einem im Querschnitt vollflächigen Stab 6 besteht.

Der Stab 6 ist dabei länger als der übrige Formkörper und ragt an seinen beiden Enden über den übrigen Formkörper hinaus. Zur Verwendung des Formkörpers als Walze, bei der das Vollwand - Außenrohr 2 hinsichtlich seiner Oberflächenbeschaffenheit und -güte in unterschiedlichster Art und Weise gestaltet sein kann, sind die herausragenden Enden als Lagerzapfen 7 ausgebildet.
Je nach Erfordernis kann der Stab in seiner Querschnittform im Bereich innerhalb des Formkörpers unterschiedlichst gestaltet sein.

Der Gedanke der Erfindung läßt sich vielfach variieren.

**Ansprüche**

1. Formkörper in Stützkernbauweise, **dadurch gekennzeichnet,** das zwischen einem Vollwand-Außenrohr (2) und einem Innenkörper eine Stützkernschicht (3) aus keramischen Material, vorzugsweise Blähton oder Blähschiefer angeordnet ist.

2. Formkörper nach Anspruch 1, dadurch gekennzeichnet, daß der Innenkörper aus einem im Querschnitt vollflächigen Stab (6) besteht.

3. Formkörper nach Anspruch 1, dadurch gekennzeichnet, daß der Innenkörper aus einem Vollwand-Innenrohr (1) gebildet ist.

4. Formkörper nach Anspruch 2 oder 3, dadurch gekennzeichnet, daß der Innenkörper länger ist als der übrige Formkörper und zumindest an einem Ende aus dem Formkörper herausragt.

5. Formkörper nach Anspruch 4, dadurch gekennzeichnet, daß das oder die herausragenden Enden als Lagerzapfen (7) ausgebildet sind.

6. Formkörper nach einem der Ansprüche 1 bis 3, dadurch gekennzeichnet, daß zwischen dem Vollwand-Außenrohr (2) und der Stützkernschicht (3) und/oder dem Innenkörper und der Stützkernschicht (3) eine Schicht aus kunstharzgetränktem Fasermaterial (5,4), vorzugsweise mit in Formkörper-Längsachse orientierter Faserrichtung angeordnet ist.

7. Formkörper nach einem der vorhergehenden Ansprüche 1 bis 6, dadurch gekennzeichnet, daß zur Bindung der Stützkernschicht (3) aus keramischem Material sowie zur Imprägnierung der Schichten aus Fasermaterial (5,4) ein härtbares Kunstharz auf der Basis von Phenol, Epoxid, Polyester, Polyamid, Silikon oder Vinylester verwendet wird.

8. Formkörper nach einem der Ansprüche 1 bis 6, dadurch gekennzeichnet, daß zur Bindung der Körnung der Stützkernschicht (3) eine Mörtelmischung auf mineralischer Basis verwendet wird.

9. Förmkörper nach Anspruch 1, dadurch gekennzeichnet, daß das Vollwandaußenrohr (2) und/oder der Innenkörper vorgefertigt wird aus Material auf der Basis von Metallen, Holz, Zellulose bzw. Kunststoff auf der Basis von Glasfaserkunststoff sowie verstärkte und unverstärkte Thermoplaste.

10. Formkörper nach einem der Ansprüche 1 bis 9, dadurch gekennzeichnet, daß der Formkörper in axialer Richtung in Einzelsegmente teilbar und wieder zusammenfügbar ist.

Fig.1

Fig. 2

Fig.3

**Fig. 4**

**Fig. 5**

**Fig. 6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 285 801   (BASLER STUCKFARBEREI AG) * Abbildungen; Spalte 1, Zeilen 44-68;  Spalte 2; Patentansprüche 1,2 * | 1,3 | F 16 L   59/14 <br> D 21 F    3/08 <br> E 04 H   12/28 <br> B 28 B   21/72 <br> F 16 L    9/14 |
| A |  | 7,9 |  |
| X | DE-A-3 040 116   (VAHLBRAUK) <br><br> * Abbildungen  1-5;   Seite   5, Zeilen  10-33;   Seite   6,  Zeilen 1-18; Seite 7;  Seite  8,   Zeilen 1-16; Seite 9, Zeilen 5-11; Seite 11, Zeilen 1-25 * | 1,3,6, 8 |  |
| A |  | 10 | **RECHERCHIERTE SACHGEBIETE (Int. Cl.4)** |
| A | GB-A-2 057 092   (YAMAUCHI RUBBER) *   Abbildungen   1-5;   Seite   2, Zeilen 23-65 * | 1,2,4, 5 | F 16 L <br> D 21 F <br> D 21 G <br> B 21 B <br> B 28 B <br> B 29 D |

Der vorliegende Recherchenbericht wurde für alle Patentansprüche erstellt.

| Recherchenort | Abschlußdatum der Recherche | Prüfer |
|---|---|---|
| DEN HAAG | 19-08-1987 | NOESEN R.F. |